# EUROPEAN PATENT SPECIFICATION

(11) **EP 3 513 938 B1**
(45) Date of publication and mention of the grant of the patent: **06.09.2023**
(21) Application number: 19151472.8
(22) Date of filing: 11.01.2019
(51) Int. Cl.: B29B 13/06, F26B 21/08, F26B 17/12, F26B 21/04, G01N 25/66, G01N 1/22, B01D 53/26

(54) **DEW POINT MEASURING DEVICE, DEHUMIDIFYING PLANT, AND METHOD FOR CONTROLLING A DEHUMIDIFYING PLANT**
TAUPUNKTMESSGERÄT, ENTFEUCHTUNGSANLAGE UND VERFAHREN ZUR STEUERUNG EINER ENTFEUCHTUNGSANLAGE
DISPOSITIF DE MESURE DU POINT DE ROSÉE, INSTALLATION DE DÉSHUMIDIFICATION ET PROCÉDÉ DE COMMANDE D'UNE INSTALLATION DE DÉSHUMIDIFICATION

(30) Priority: 19.01.2018 IT 201800001352
(43) Date of publication of application: 24.07.2019
(73) Proprietor: Piovan S.P.A., 30036 Santa Maria di Sala (VE) (IT)
(72) Inventor: BELLIO, Enrico, 31050 Ponzano V.to (TV) (IT)
(74) Representative: Luppi Intellectual Property S.r.l.

(56) References cited:
- EP-A1- 2 186 613
- WO-A1-2016/087980
- WO-A1-2017/103721
- CN-U- 204 758 345
- DE-A1- 2 052 334
- JP-A- 2011 099 641
- US-A- 5 896 675
- US-B2- 7 415 901

## Description

The invention relates to a dew point measuring device, a dehumidifying plant and a method for controlling a dehumidifying plant.

More precisely, the invention refers to a dew point measuring device, configured for measuring a dew point of a process fluid that flows in plant for dehumidifying plastics, to a dehumidifying plant that comprises this device, and to a method for controlling a dehumidifying plant that uses this device.

In the plastics moulding industry, it is known to associate a dehumidifying plant for dehumidifying plastics in granular and/or microgranular and/or powder and/or flake or similar form with at least one user machine, in particular a machine for treating and transforming plastics, comprising a melting apparatus for melting plastics, and a moulding apparatus for moulding, in particular by injection and/or blowing and/or compression, the plastics.

Known dehumidifying plants are configured for treating, i.e. dehumidifying, by a process fluid, typically air, plastics, before the latter are supplied to the at least one user machine, and are provided with a process fluid generator configured for generating the process fluid, and with at least one dehumidifying hopper configured for dehumidifying the plastics. Also, known dehumidifying plants comprise absorbing elements configured for absorbing humidity from the process fluid during a dehumidifying step and releasing into the environment the humidity absorbed in this step during a step known as the regeneration step.

In order to dehumidify effectively and energetically efficiently the plastics before the plastics are supplied to the, at least one, user machine, it is necessary for the process fluid to have a preset dew point value, measured in °C, or, in certain applications, as a mass ratio or as parts per million (ppm), this dew point value having to be maintained stable over time.

The need is thus felt strongly, in the field of plastics dehumidifying plants, to measure in the most precise and correct manner possible the dew point value of the process fluid in order to ensure, in addition to correct dehumidification of the plastics, also energy optimation of the process of dehumidifying the plastics. In fact, an imprecise reading of the dew point value could increase, without a real need, the number of regeneration steps, which regeneration steps require a high energy contribution to heat the aforesaid absorbing elements in order to release the absorbed humidity into the environment.

Further, an inaccurate reading of the dew point value could compromise the chemical and/or physical and/or mechanical and/or optical features of the plastics during the residence time in the hopper. In fact, over time, portions of plastics might be treated differently because of a different, or inconstant, reading of the dew point value, this creating problems of lack of uniformity in the production batch.

Also, an inaccurate reading of the dew point value causes slowness or deviation in the regulating chain of the dehumidifying plant, this compromising adjusting stability.

For this reason, known dehumidifying plants are provided with dew point measuring devices configured for measuring the dew point of the process fluid.

These dew point measuring devices comprise an extracting hole for extracting from the dehumidifying plants a certain quantity of process fluid. In particular, the through extracting hole is obtained in a wall of a conduit included in known dehumidifying plants, and positioned immediately downstream, with respect to an advancement direction of the process fluid in the dehumidifying plants, of a mixing zone between a process fluid exiting the process fluid generator, i.e. a process fluid that is "drier" because it has been treated by the generator, and a process fluid exiting the dehumidifying hopper, i.e. a process fluid that is "wetter" because it takes with itself the humidity taken from the plastics. In particular, this extracting hole extends along an axis that is perpendicular to the advancement direction of the process fluid.

In use, the dehumidifying plants modify, by suitable valves, the flowrate percentage of "drier" and "wetter" fluid so as to adjust, in particular stabilize, with respect to a required value, the current value of the dew point measured by the dew point measuring devices.

The latter further comprise a processing unit, in flowing communication with the extracting hole by a stiff or flexible pipe, which processing unit receives from the extracting hole the quantity of process fluid extracted from the conduit and determines a dew point value of this quantity of process fluid.

US5896675A discloses a device with at least one storage container for plastic material granules to be treated.

US7415901B2 disclosed a duct probe assembly system for multipoint air sampling.

One drawback of known dew point measuring devices is that they do not permit an accurate and correct reading of the dew point value.

In fact, the conformation/position of the extracting hole permits only a "spot" reading of the dew point value, this spot reading being able to provide a dew point value that is not actually representative, because, for example:
- a measurement made of a quantity of process fluid that might not be perfectly mixed, for example because of the occurrence, because of the surface roughness of the conduit wall, of separation of the process fluid, which separation generates turbulence near the extracting hole, which turbulence causes uncontrolled mixing between the process fluid exiting the process fluid generator and the process fluid exiting the dehumidifying hopper;
- a measurement of a quantity of air that owing to the aforesaid flow separation undergoes a pressure variation at the extracting hole;
- a measurement of a quantity of air which underwent, owing to a Venturi effect that prevents the process fluid entering the extracting hole, a pressure reduction at the extracting hole.

One object of the invention is to improve the dew point measuring devices configured for measuring a dew point of a process fluid that flows in a plastics dehumidifying plant. Another object is to provide a dew point measuring device that is usable in a plastics dehumidifying plant that supplies a dew point of the process fluid that is more accurate and correct than that of known devices.

Another further object is to improve dehumidifying plants.

A further object is to improve the control methods for controlling a dehumidifying plant. These and still other objects are achieved by a dew point measuring device according to the invention, by a dehumidifying plant that comprises this device, and by a method for controlling a dehumidifying plant that uses this device.

The invention can be better understood and implemented with reference to the enclosed drawings that illustrate some embodiments thereof by way of non-limiting example, in which:
- Figure 1 is a schematic view of a dehumidifying plant according to the present invention, associated with a user machine;
- Figure 2 is a partially fragmentary side view of an enlarged detail of the dehumidifying plant of Figure 1;
- Figure 3 is a top view of Figure 2;
- Figure 4 is a cross section of Figure 2;
- Figure 5 is a bottom view of a tubular element for extracting process fluid included in the dehumidifying plant of Figure 1;
- Figure 6 is a cross section of the tubular element for extracting process fluid of Figure 5;
- Figure 7 is a cross section of a version of the tubular element for extracting process fluid included in the dehumidifying plant of Figure 1;
- Figure 8 is a view like that of Figure 2 of a version of the enlarged detail of the dehumidifying plant of Figure 1;
- Figure 9 is a top view of Figure 8;
- Figure 10 is a cross section of Figure 8; and
- Figure 11 is a view like that of Figure 3 of a further version of the enlarged detail of the dehumidifying plant of Figure 1.

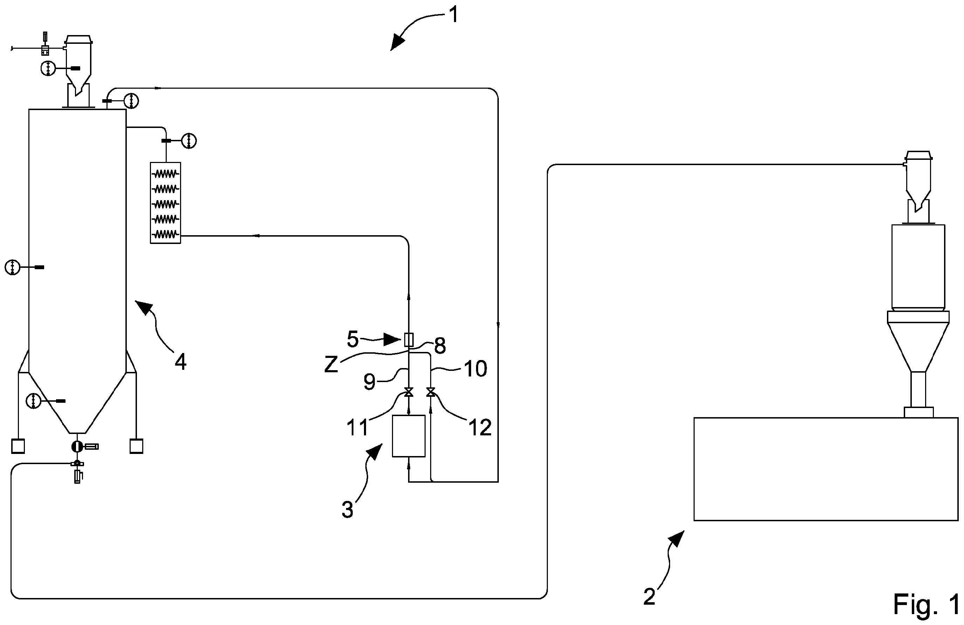

In Figure 1, with the number 1 overall a dehumidifying plant is indicated that is configured for treating, i.e. dehumidifying, by a process fluid, typically air, plastics, which are not shown, in granular and/or microgranular and/or powder and/or flake or similar form, before the latter is supplied to at least one user machine 2, in particular a machine for treating and transforming the plastics, this user machine 2 comprising a melting apparatus, which is not shown, for melting the plastics, and a moulding apparatus, which is not shown, for moulding, in particular by injection and/or blowing and/or compression, the plastics.

The dehumidifying plant 1 illustrated in Figure 1 comprises, *inter alia,* a process fluid generator 3 configured for generating a flow of process fluid, at least one dehumidifying hopper 4 configured for dehumidifying the plastics, and absorbing elements, which are not shown, configured for absorbing humidity from the process fluid during a dehumidifying step and releasing humidity to the process fluid during a regeneration step. The dehumidifying plant 1 further comprises a dew point 5 measuring device configured for measuring a dew point of the process fluid that flows in the dehumidifying plant 1.

In fact, as hinted previously, in plastics dehumidifying plants, it is essential to measure as accurately and correctly as possible the dew point value of the process fluid in order to ensure not only correct dehumidifying of the plastics but also energy optimization of the plastics dehumidification process.

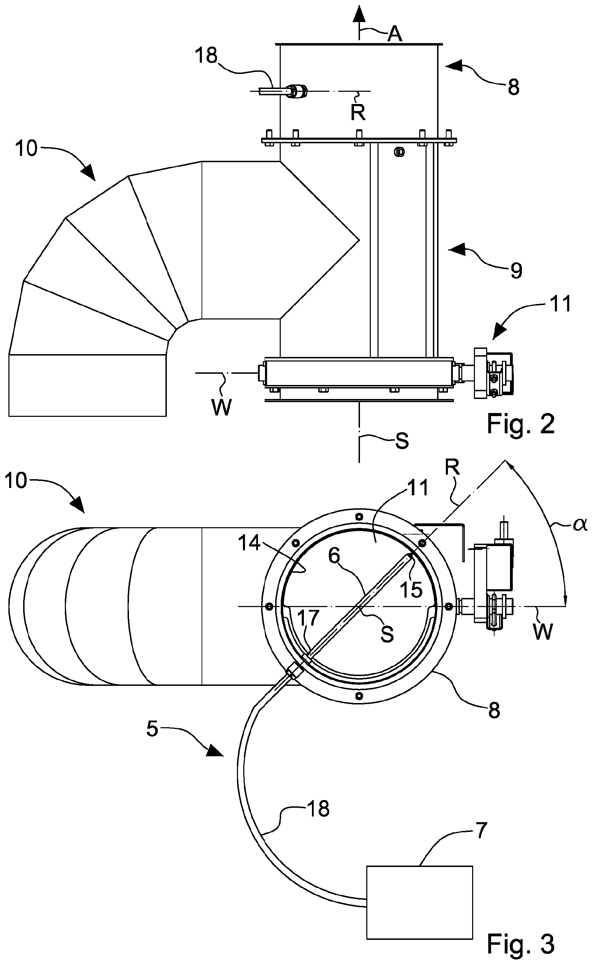

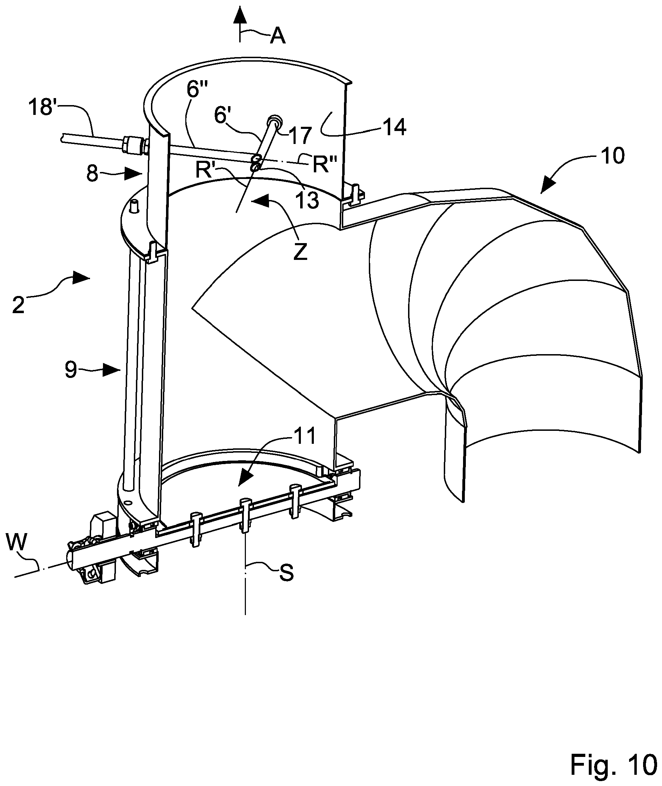

The dew point 5 measuring device comprises process fluid extracting means 6, 6', 6" (all or some of which are illustrated in Figures 3, 4, 5, 6, 7, 9, 10, and 11), which process fluid extracting means 6, 6', 6" is configured for extracting from the dehumidifying plant 1 a quantity of process fluid, and processing means 7 (illustrated in Figures 3, 9, and 11), of known type, in flowing communication with the process fluid extracting means 6, 6', 6", which processing means 7 is configured for receiving from the process fluid extracting means 6, 6', 6" this quantity of process fluid and determining, in a known manner, a dew point value of this quantity of process fluid.

The process fluid extracting means 6, 6', 6" is located in an extraction conduit or portion of conduit 8 (illustrated in Figures 1, 2, 3, 4, 8, 9, 10, and 11) included in the dehumidifying plant 1 and positioned immediately downstream, with respect to an advancement direction A of the process fluid in the dehumidifying plant 1, of a joining point between a first conduit 9 (illustrated in Figures 1, 2, 4, 8, and 10) arranged for conveying a process fluid exiting the process fluid generator 3, i.e. a "drier" process fluid because it is treated by the generator 3, and a second conduit 10 (illustrated in Figures 1, 2, 3, 4, 8, 9, 10, and 11) arranged for conveying a process fluid exiting the dehumidifying hopper 4, i.e. a "wetter" process fluid because it takes with itself the humidity taken from the plastics.

More precisely, the extraction conduit 8, and thus the process fluid extracting means 6, 6', 6", is/are positioned immediately downstream, with respect to the advancement direction A of the process fluid in the dehumidifying plant 1, of a mixing zone Z (illustrated in Figures 1, 4, and 10) between the process fluid exiting the process fluid generator 3 and the process fluid exiting the at least one dehumidifying hopper 4.

Inside the aforesaid first conduit 9 a first adjusting valve 11 is provided (illustrated in Figures 1, 2, 3, 4, 8, 9, 10, and 11) arranged for adjusting a flow of the process fluid exiting the process fluid generator 3, and, similarly, inside the second conduit 10, a second 12 adjusting valve (illustrated in Figure 1) is provided that is arranged for adjusting a flow of the process fluid exiting the at least one dehumidifying hopper 4.

In this manner, in use, by acting on the first 11 and second 12 adjusting valve, it is possible to modify the "drier" and "wetter" fluid flow percentage, so as to adjust, in particular stabilize, the current value of the dew point of the resulting process fluid compared with a required process value.

According to the present invention, the aforesaid process fluid extracting means comprises at least two process fluid extracting tubular elements 6, 6', 6" (Figures 2-11) projecting to the inside of the extraction conduit 8.

The process fluid extracting tubular elements 6, 6', 6" are provided with a plurality of through holes 13 for extracting process fluid, for example twelve, which process fluid extracting holes 13 are each configured for extracting, according to the position thereof on the process fluid extracting tubular element 6, 6', 6", a determined quantity of process fluid from a respective inner zone of the extraction conduit 8, which inner zone of the extraction conduit 8 is bounded laterally by an inner wall 14 (Figure 3, 4, and 9-11) of the extraction conduit 8.

The process fluid extracting holes 13 are arranged in sequence along an axis R, R', R" of prevalent extent of the process fluid extracting tubular element 6, 6', 6".

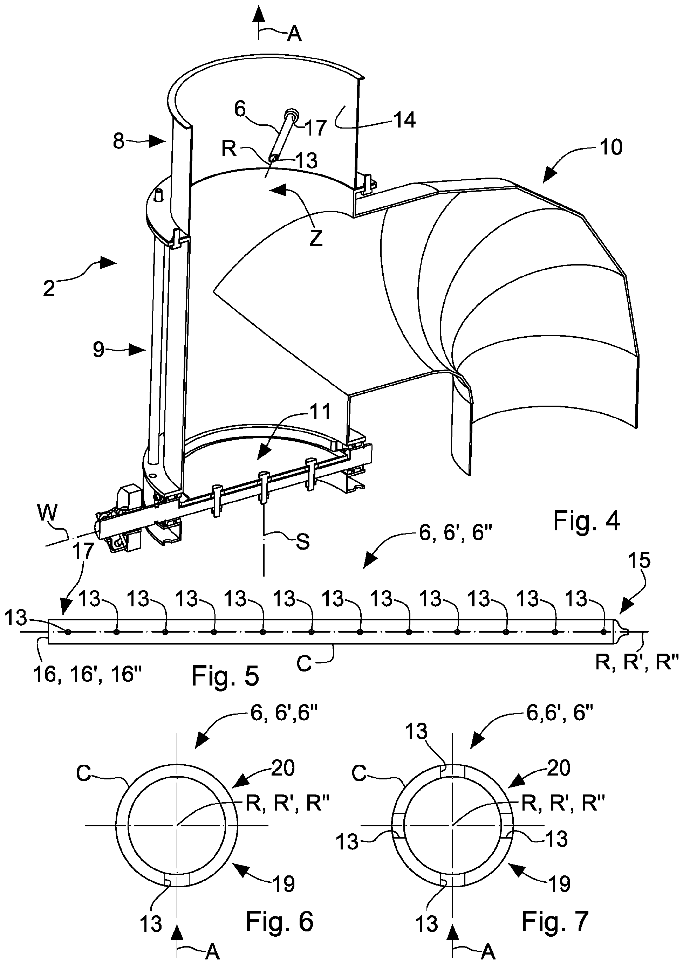

More precisely, the process fluid extracting holes 13 are positioned "below" in the process fluid extracting tubular element 6, 6', 6", i.e. are obtained in a lower portion 19, for example semicylindrical, of the process fluid extracting tubular element 6, 6', 6" positioned operationally further upstream, with respect to the advancement direction A of the process fluid, than an upper portion 20, for example also semicylindrical, of the process fluid extracting tubular element 6, 6', 6" (Figures 6 and 7).

In particular, as shown in Figure 5, the process fluid extracting holes 13 are arranged in sequence along the axis R, R', R" of prevalent extent so as to be equidistant from one another according to a law of linear distribution.

In one embodiment of the invention, which is not illustrated, the process fluid extracting holes 13 are arranged in sequence along the axis R, R', R" of prevalent extent so as to be closer to one another near the inner wall 14 of the extraction conduit 8 and further from one another near an axis of symmetry S (Figures 2-4, and 8-11) of the extraction conduit 8 according to a law of quadratic distribution.

Still more in particular, the process fluid extracting holes 13 are arranged in sequence parallel to the axis R of prevalent extent so as to form a single row (Figures 5 and 6).

In one embodiment of the invention, illustrated in Figure 7, the process fluid extracting holes 13 are arranged in sequence parallel to the axis R, R', R" of prevalent extent so as to form a plurality of rows that are substantially parallel to and angularly spaced apart from one another, for example by substantially 45°, or 90°, along a circumference C of the at least one process fluid extracting tubular element 6, 6', 6".

Still more in particular, the process fluid extracting holes 13 have diameters that decrease towards the axis of symmetry S of the extraction conduit 8.

The particular configuration/distribution of the process fluid extracting holes 13 enables different samples to be taken of process fluid (air masses), which are greater in the zones nearer the inner wall 14 of the extraction conduit 8, where the flow speed of the process fluid is less and the process fluid may not be evenly distributed, and less near the axis of symmetry S of the extraction conduit 8, where the flow speed of the process fluid is greater and the fluid is evenly distributed.

Also, the axis R, R', R" of prevalent extent along which the at least one process fluid extracting tubular element 6, 6', 6" extends lies on a plane, which is not shown, which is positioned transversely, in particular perpendicularly, to the advancement direction A of the process fluid.

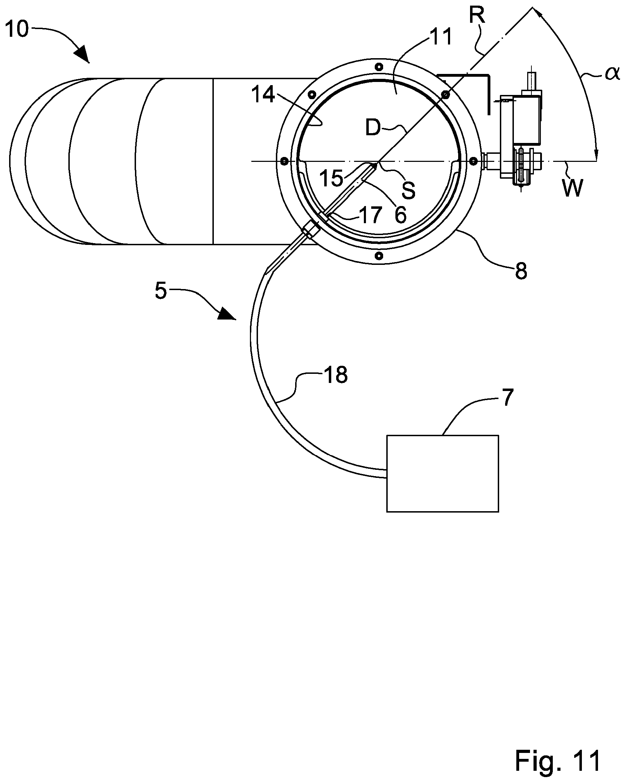

More precisely, the axis R, R', R" of prevalent extent extends substantially parallel to a diameter D (Figure 11) of the extraction conduit 8.

Still more precisely, the axis R of prevalent extent forms an angle α, less than 90°, in particular substantially equal to 45°, with respect to a rotation axis W of the first adjusting valve 11 of the flow of the process fluid exiting the process fluid generator 3, which rotation axis W lies on a plane, which is not shown, which is positioned transversely, in particular perpendicularly, to the advancement direction A of the process fluid in the dehumidifying plant 1 (Figures 3, 9 and 11).

This particular arrangement of the axis R, R', R" of prevalent extent with respect to the rotation axis W of the first adjusting valve 11, enables more significant samples of process fluid (air masses) to be taken.

In an example outside the scope of the present invention illustrated in Figures 2, 3 and 4, only one process fluid extracting tubular element 6 is provided, which extends substantially along the axis R of prevalent extent thereof substantially for the entire diameter D of the extraction conduit 8. In another example outside the scope of the present invention, illustrated in Figure 11, only one process fluid extracting tubular element 6 is provided, which extends substantially along the axis R of prevalent extent thereof along a reduced portion of the diameter D comprised between the inner wall 14 of the extraction conduit 8 and the axis of symmetry S of the extraction conduit 8.

Also, the at least one process fluid extracting tubular element 6, 6', 6" is closed at a distal end 15 thereof, and comprises an opening 16 (Figure 5) at a proximal end 17 thereof, this opening 16 being in flowing communication, by a stiff or flexible tube 18, 18' (Figures 2, 3, and 8-11), with the processing means 7.

The latter are positioned outside the extraction conduit 8 in a position that is easily reachable by an operator.

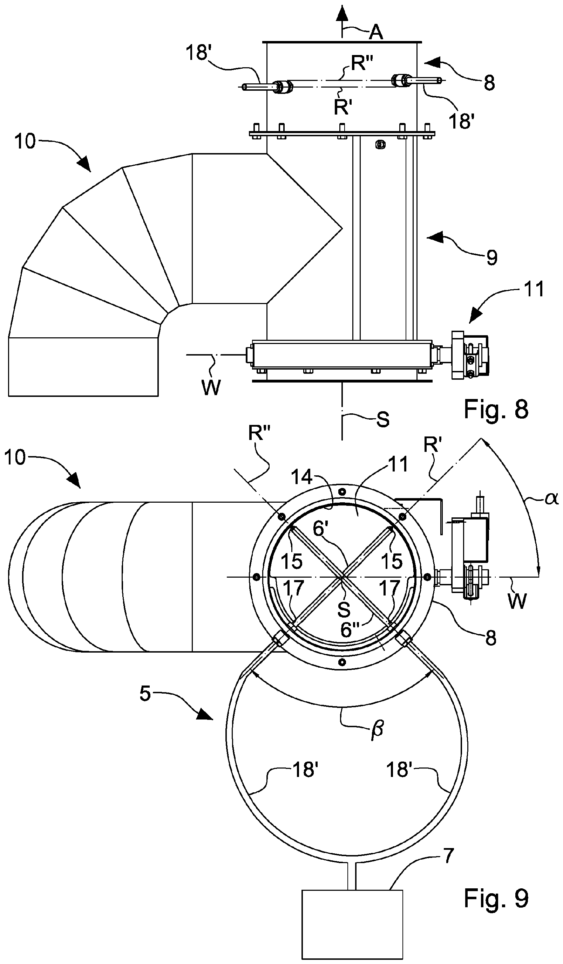

According to the present invention and as illustrated in Figures 8, 9, and 10, the process fluid extracting means comprises at least two process fluid extracting tubular elements 6', 6", each extending along a respective axis R', R" of prevalent extent.

In this embodiment, the aforesaid axes R', R" of prevalent extent lie on respective planes, which are not shown, which are positioned in sequence transversely, in particular perpendicularly, to the advancement direction A of the process fluid.

In one embodiment of the invention, which is not illustrated, the axes R', R" of prevalent extent are positioned on the same plane, which is positioned transversely, in particular perpendicularly, to the advancement direction A of the process fluid.

Also, the aforesaid axes R', R" of prevalent extent are angularly staggered from one another by an angle β of less than 180°, in particular substantially equal to 90° (Figure 9). This configuration of the axes R', R" of prevalent extent, and consequently this arrangement of the two tubular elements 6', 6', enables several samples of process fluid (air masses) to be taken in the section of the extraction conduit 8, this enabling optimum distribution of the removed samples to be obtained and the impact of a single reading compared with the others to be reduced.

In one embodiment of the invention, which is not illustrated, the axes R', R" of prevalent extent are aligned on one another.

As shown in Figure 9, in the embodiment in which the process fluid extracting means 6, 6', 6" comprises two extracting tubular elements 6', 6, stiff or flexible pipe means 18' is provided, for connecting in parallel to one another respective openings 16', 16" of the two process fluid extracting tubular elements 6', 6" before the entry into the processing means 7 of the process fluid taken from the extraction conduit 8.

In use, the extracting holes 13 each extract, downstream of the mixing zone Z, a determined quantity of process fluid from the respective inner zone of the extraction conduit 8. The determined quantities of said process fluid extracted from each extracting hole 13 are then mixed inside the one or more extracting tubular elements 6, 6', 6". The mixture that is thus obtained then flows to the processing means 7.

This enables a more precise and accurate dew point value to be obtained inasmuch as this value is a "filtered" value, i.e. is the averaged value of several sampling points.

In other words, the dew point value provided by the processing means 7 will be the average of the dew point values read in a plurality of points inside the extraction conduit 8, the number of points being the same as the number of extracting holes 13. In the case of several extracting tubular elements 6', 6 arranged in sequence, the dew point values will also be read at different moments.

This enables the detected dew point value to be averaged over the entire reading range of this parameter.

It goes within saying that using the dew point 5 measuring device in a dehumidifying plant 1 and in a method for controlling a dehumidifying plant 1 enables the dew point value of the process fluid to be measured more precisely and correctly, this ensuring not only correct dehumidification of the plastics but also energy optimization of the plastics dehumidification process.

It should also be noted that the dew point 5 measuring device according to the invention is easy to make and is installable subsequently also in already existing dehumidifying plants.

## Claims

1. Dew point (5) measuring device for measuring a dew point of a process fluid which flows in a dehumidifying plant (1) for dehumidifying plastics in granular and/or microgranular and/or powder and/or flake form, said plant (1) comprising a process fluid generator (3) and at least one dehumidifying hopper (4) intended for supplying a respective user machine (2);
wherein said dew point (5) measuring device comprises:
process fluid extracting means (6, 6', 6"), which is configured for extracting from said dehumidifying plant (1) a quantity of process fluid and is arranged in an extraction conduit (8) included in said dehumidifying plant (1) and positioned immediately downstream, with respect to an advancement direction (A) of said process fluid in said dehumidifying plant (1), of a mixing zone (Z) between a process fluid exiting said process fluid generator (3) and a process fluid exiting said at least one dehumidifying hopper (4); and
processing means (7), in flowing communication with said process fluid extracting means (6, 6', 6") for receiving from said process fluid extracting means (6, 6', 6") said quantity of process fluid and determining a dew point value of said quantity of process fluid;
wherein said process fluid extracting means comprises at least one process fluid extracting tubular element (6, 6', 6") projecting inwards said extraction conduit (8) and provided with a plurality of process fluid extracting holes (13), each of them for extracting a determined quantity of said process fluid from a respective inner zone of said extraction conduit (8), said at least one process fluid extracting tubular element (6, 6', 6") mixing internally said determined quantities of said process fluid extracted by said process fluid extracting holes (13) and sending a mixture of said determined quantities of said process fluid to said processing means (7);
said dew point (5) measuring device is **characterized in that** it comprises at least two of said process fluid extracting tubular elements (6, 6', 6") each extending along a respective axis (R', R") of prevalent extent;
wherein said respective axes (R', R") of prevalent extent lie on respective planes positioned in sequence transversely, in particular perpendicularly, to said advancement direction (A) of said process fluid; or wherein said axes (R', R") of prevalent extent are positioned on a same plane positioned transversely, in particular perpendicularly, to said advancement direction (A) of said process fluid;
wherein said axes (R', R") of prevalent extent are angularly staggered in relation to one another by an angle (β) that is less than 180°, in particular substantially the same as 90°, or
wherein said axes (R', R") of prevalent extent are aligned on one another.

2. Dew point (5) measuring device according to claim 1, wherein said axis (R, R', R") of prevalent extent forms an angle (α) that is less than 90°, in particular substantially the same as 45°, with respect to a rotation axis (W) of an adjusting valve (11) arranged for adjusting a flow of said process fluid exiting said process fluid generator (3), which rotation axis (W) lies on a plane positioned transversely, in particular perpendicularly, to said advancement direction (A) of said process fluid.

3. Dew point (5) measuring device according to claim 1 or 2, in which said axis (R, R', R") of prevalent extent extends substantially parallel to a diameter (D) of said extraction conduit (8).

4. Dew point (5) measuring device according to claim 3, wherein said at least two process fluid extracting tubular elements (6, 6', 6") extend substantially along all said diameter (D) of said extraction conduit (8); or wherein said at least two process fluid extracting tubular elements (6, 6', 6") extend along a portion of said diameter (D) comprised between an inner wall (14) of said extraction conduit (8) and an axis (S) of symmetry of said extraction conduit (8).

5. Dew point (5) measuring device according to any one of claims 1 to 4, wherein said process fluid extracting holes (13) are arranged in sequence along said axis (R, R', R") of prevalent extent.

6. Dew point (5) measuring device according to any one of claims 1 to 5, wherein said process fluid extracting holes (13) are arranged in sequence along said axis (R, R', R") of prevalent extent so as to be equidistant from one another according to a linear distribution law, or so as to be nearer one another in the proximity of an inner wall (14) of said extraction conduit (8) and further from one another in the proximity of an axis (S) of symmetry of said extraction conduit (8) according to a quadratic distribution law.

7. Dew point (5) measuring device according to any one of claims 1 to 6, wherein said process fluid extracting holes (13) are arranged in sequence parallel to said axis (R, R', R") of prevalent extent so as to form a row; or wherein said process fluid extracting holes (13) are arranged in sequence parallel to said axis (R, R', R") of prevalent extent so as to form a plurality of rows that are substantially parallel to one another and angularly spaced along a circumference (C) of said at least one process fluid extracting tubular element (6, 6', 6").

8. Dew point (5) measuring device according to any one of claims 1 to 7, wherein said process fluid extracting holes (13) have diameters that decrease towards an axis (S) of symmetry of said extraction conduit (8).

9. Dew point (5) measuring device according to any one of claims 1 to 8, wherein said at least two process fluid extracting tubular elements (6, 6', 6") are closed at distal end (15) thereof, and wherein said process fluid extracting tubular elements (6, 6', 6") comprise an opening (16, 16', 16") at a proximal end (17) thereof, which opening (16) being in flowing communication with said processing means (7).

10. Dew point (5) measuring device according to any one of claims 1 to 9, further comprising pipe means (18') for connecting in parallel one another respective openings (16', 16") of said at least two process fluid extracting tubular elements (6', 6") before entry into said processing means (7).

11. Dehumidifying plant (1) for dehumidifying plastics in granular and/or microgranular and/or powder and/or flake form, said plant (1) comprising a process fluid generator (3) and at least one dehumidifying hopper (4) intended for supplying a respective user machine (2), in particular a plastics treating and transforming machine, said user machine (2) comprising a melting apparatus for melting said plastics and a moulding apparatus for moulding, in particular by injection and/or blowing and/or compression, said plastics;
said plant (1) is **characterized in that**
it comprises a dew point (5) measuring device as claimed in any one of claims 1 to 10.

12. Method for controlling a dehumidifying plant (1) of plastics in granular and/or microgranular and/or powder and/or flake form, said plant (1) comprising a process fluid generator (3) and at least one dehumidifying hopper (4) intended for supplying a respective user machine (2), in particular a plastics treating and transforming machine, said user machine (2) comprising a melting apparatus for melting said plastics and a moulding apparatus for moulding, in particular by injection and/or blowing and/or compression, said plastics;
said method is **characterized in that**
a dew point (5) measuring device as claimed in any one of claims 1 to 10 is used.

## Patentansprüche

1. Taupunktmessvorrichtung (5) zum Messen eines Taupunkts eines Prozessfluids, das in einer Entfeuchtungsanlage (1) zum Entfeuchten von Kunststoff in granulärer und/oder mikrogranulärer und/oder Pulver- und/oder Flockenform strömt, wobei die Anlage (1) einen Prozessfluidgenerator (3) und mindestens einen Entfeuchtungstrichter (4) umfasst, der zum Versorgen einer jeweiligen Benutzermaschine (2) bestimmt ist;
wobei die Taupunktmessvorrichtung (5) umfasst:
eine Prozessfluidextraktionseinrichtung (6, 6', 6"), die zum Extrahieren einer Menge an Prozessfluid aus der Entfeuchtungsanlage (1) eingerichtet ist und in einer Extraktionsleitung (8) angeordnet ist, die in der Entfeuchtungsanlage (1) enthalten ist und mit Bezug auf eine Förderrichtung (A) des Prozessfluids in der Entfeuchtungsanlage (1) unmittelbar stromabwärts einer Mischzone (Z) zwischen einem Prozessfluid, das den Prozessfluidgenerator (3) verlässt, und einem Prozessfluid, das den mindestens einen Entfeuchtungstrichter (4) verlässt, positioniert ist; und
eine Verarbeitungseinrichtung (7) in Strömungsverbindung mit der Prozessfluidextraktionseinrichtung (6, 6', 6") zum Empfangen der Menge an Prozessfluid von der Prozessfluidextraktionseinrichtung (6, 6', 6") und Bestimmen eines Taupunktwerts der Menge an Prozessfluid;
wobei die Prozessfluidextraktionseinrichtung mindestens ein röhrenförmiges Prozessfluidextraktionselement (6, 6', 6") umfasst, das einwärts in die Extraktionsleitung (8) vorsteht und mit einer Vielzahl von Prozessfluidextraktionslöchern (13) versehen ist, von denen jedes zum Extrahieren einer bestimmten Menge des Prozessfluids von einer jeweiligen inneren Zone der Extraktionsleitung (8) dient, wobei das mindestens eine röhrenförmige Prozessfluidextraktionselement (6, 6', 6") intern die bestimmten Mengen des durch die Prozessfluidextraktionslöcher (13) extrahierten Prozessfluids mischt und ein Gemisch der bestimmten Mengen des Prozessfluids zur Verarbeitungseinrichtung (7) schickt;
wobei die Taupunktmessvorrichtung (5) **dadurch gekennzeichnet ist, dass** sie mindestens zwei der röhrenförmigen Prozessfluidextraktionselemente (6, 6', 6") umfasst, die sich jeweils entlang einer jeweiligen Achse (R', R") vorherrschender Ausdehnung erstrecken;
wobei die jeweiligen Achsen (R', R") vorherrschender Ausdehnung auf jeweiligen Ebenen liegen, die nacheinander quer, insbesondere senkrecht zur Förderrichtung (A) des Prozessfluids positioniert sind; oder wobei die Achsen (R', R") vorherrschender Ausdehnung auf einer gleichen Ebene positioniert sind, die quer, insbesondere senkrecht, zur Förderrichtung (A) des Prozessfluids positioniert ist;
wobei die Achsen (R', R") vorherrschender Ausdehnung in Bezug aufeinander um einen Winkel (β) winkelmäßig versetzt sind, der geringer als 180°, insbesondere im Wesentlichen gleich 90° ist, oder wobei die Achsen (R', R") vorherrschender Ausdehnung aufeinander ausgerichtet sind.

2. Taupunktmessvorrichtung (5) nach Anspruch 1, wobei die Achse (R, R', R") vorherrschender Ausdehnung einen Winkel (α), der geringer als 90°, insbesondere im Wesentlichen gleich 45° ist, mit Bezug auf eine Drehachse (W) eines Einstellventils (11) bildet, das zum Einstellen einer Strömung des Prozessfluids, das den Prozessfluidgenerator (3) verlässt, angeordnet ist, wobei die Drehachse (W) auf einer Ebene liegt, die quer, insbesondere senkrecht, zur Förderrichtung (A) des Prozessfluids positioniert ist.

3. Taupunktmessvorrichtung (5) nach Anspruch 1 oder 2, wobei die Achse (R, R', R") vorherrschender Ausdehnung sich im Wesentlichen parallel zu einem Durchmesser (D) der Extraktionsleitung (8) erstreckt.

4. Taupunktmessvorrichtung (5) nach Anspruch 3, wobei die mindestens zwei röhrenförmigen Prozessfluidextraktionselemente (6, 6', 6") sich im Wesentlichen entlang des ganzen Durchmessers (D) der Extraktionsleitung (8) erstrecken; oder wobei die mindestens zwei röhrenförmigen Prozessfluidextraktionselemente (6, 6', 6") sich entlang eines Teils des Durchmessers (D) erstrecken, der zwischen einer Innenwand (14) der Extraktionsleitung (8) und einer Symmetrieachse (S) der Extraktionsleitung (8) enthalten ist.

5. Taupunktmessvorrichtung (5) nach einem der Ansprüche 1 bis 4, wobei die Prozessfluidextraktionslöcher (13) nacheinander entlang der Achse (R, R', R") vorherrschender Ausdehnung angeordnet sind.

6. Taupunktmessvorrichtung (5) nach einem der Ansprüche 1 bis 5, wobei die Prozessfluidextraktionslöcher (13) nacheinander entlang der Achse (R, R', R") vorherrschender Ausdehnung angeordnet sind, so dass sie gemäß einem linearen Verteilungsgesetz voneinander abstandsgleich sind, oder so dass sie gemäß einem quadratischen Verteilungsgesetz in der Nähe einer Innenwand (14) der Extraktionsleitung (8) näher beieinander liegen und in der Nähe einer Symmetrieachse (S) der Extraktionsleitung (8) weiter voneinander liegen.

7. Taupunktmessvorrichtung (5) nach einem der Ansprüche 1 bis 6, wobei die Prozessfluidextraktionslöcher (13) nacheinander parallel zu der Achse (R, R', R") vorherrschender Ausdehnung angeordnet sind, um eine Reihe zu bilden; oder wobei die Prozessfluidextraktionslöcher (13) nacheinander parallel zu der Achse (R, R', R") vorherrschender Ausdehnung angeordnet sind, um eine Vielzahl von Reihen zu bilden, die im Wesentlichen zueinander parallel sind und im Winkel entlang eines Umfangs (C) des mindestens einen röhrenförmigen Prozessfluidextraktionselements (6, 6', 6") beabstandet sind.

8. Taupunktmessvorrichtung (5) nach einem der Ansprüche 1 bis 7, wobei die Prozessfluidextraktionslöcher (13) Durchmesser aufweisen, die in Richtung einer Symmetrieachse (S) der Extraktionsleitung (8) abnehmen.

9. Taupunktmessvorrichtung (5) nach einem der Ansprüche 1 bis 8, wobei die mindestens zwei röhrenförmigen Prozessfluidextraktionselemente (6, 6', 6") am distalen Ende (15) davon geschlossen sind und wobei die röhrenförmigen Prozessfluidextraktionselemente (6, 6', 6") eine Öffnung (16, 16', 16") an einem proximalen Ende (17) davon umfassen, wobei die Öffnung (16) mit der Verarbeitungseinrichtung (7) in Strömungsverbindung steht.

10. Taupunktmessvorrichtung (5) nach einem der Ansprüche 1 bis 9, die ferner eine Rohreinrichtung (18') zum Verbinden von jeweiligen Öffnungen (16', 16") der mindestens zwei röhrenförmigen Prozessfluidextraktionselemente (6', 6") parallel zueinander vor dem Eintritt in die Verarbeitungseinrichtung (7) umfasst.

11. Entfeuchtungsanlage (1) zum Entfeuchten von Kunststoffen in granulärer und/oder mikrogranulärer und/oder Pulver- und/oder Flockenform, wobei die Anlage (1) einen Prozessfluidgenerator (3) und mindestens einen Entfeuchtungstrichter (4) umfasst, der zum Versorgen einer jeweiligen Benutzermaschine (2), insbesondere einer Kunststoffbehandlungs- und -transformationsmaschine, bestimmt ist, wobei die Benutzermaschine (2) eine Schmelzeinrichtung zum Schmelzen des Kunststoffs und eine Formeinrichtung zum Formen, insbesondere durch Spritzen und/oder Blasen und/oder Kompression, des Kunststoffs umfasst;
wobei die Anlage (1) **dadurch gekennzeichnet ist, dass**
sie eine Taupunktmessvorrichtung (5) nach einem der Ansprüche 1 bis 10 umfasst.

12. Verfahren zum Steuern einer Entfeuchtungsanlage (1) für Kunststoff in granulärer und/oder mikrogranulärer und/oder Pulver- und/oder Flockenform, wobei die Anlage (1) einen Prozessfluidgenerator (3) und mindestens einen Entfeuchtungstrichter (4) umfasst, der zum Versorgen einer jeweiligen Benutzermaschine (2), insbesondere einer Kunststoffbehandlungs- und -transformationsmaschine, bestimmt ist, wobei die Benutzermaschine (2) eine Schmelzeinrichtung zum Schmelzen des Kunststoffs und eine Formeinrichtung zum Formen, insbesondere durch Spritzen und/oder Blasen und/oder Kompression, des Kunststoffs umfasst;
wobei das Verfahren **dadurch gekennzeichnet ist, dass**
eine Taupunktmessvorrichtung (5) nach einem der Ansprüche 1 bis 10 verwendet wird.

## Revendications

1. Dispositif de mesure du point de rosée (5) pour mesurer un point de rosée d'un fluide de traitement qui s'écoule dans une installation de déshumidification (1) pour déshumidifier des matières plastiques sous la forme de granulés et/ou de microgranulés et/ou de poudre et/ou de flocons, ladite installation (1) comprenant un générateur de fluide de traitement (3) et au moins une trémie de déshumidification (4) destinée à alimenter une machine d'utilisateur respective (2) ;
dans lequel ledit dispositif de mesure du point de rosée (5) comprend :
un moyen d'extraction de fluide de traitement (6, 6', 6"), qui est configuré pour extraire de ladite installation de déshumidification (1) une quantité de fluide de traitement et est agencé dans un conduit d'extraction (8) inclus dans ladite installation de déshumidification (1) et positionné immédiatement en aval, par rapport à une direction d'avancement (A) dudit fluide de traitement dans ladite installation de déshumidification (1), d'une zone de mélange (Z) entre un fluide de traitement quittant ledit générateur de fluide de traitement (3) et un fluide de traitement quittant ladite au moins une trémie de déshumidification (4) ; et
un moyen de traitement (7), en communication fluidique avec ledit moyen d'extraction de fluide de traitement (6, 6', 6") pour recevoir en provenance dudit moyen d'extraction de fluide de traitement (6, 6', 6") ladite quantité de fluide de traitement et déterminer une valeur de point de rosée de ladite quantité de fluide de traitement ;
dans lequel ledit moyen d'extraction de fluide de traitement comprend au moins un élément tubulaire d'extraction de fluide de traitement (6, 6', 6") faisant saillie vers l'intérieur dudit conduit d'extraction (8) et doté d'une pluralité de trous d'extraction de fluide de traitement (13), chacun d'eux étant destiné à extraire une quantité déterminée dudit fluide de traitement à partir d'une zone interne respective dudit conduit d'extraction (8), ledit au moins un élément tubulaire d'extraction de fluide de traitement (6, 6', 6'') mélangeant à l'intérieur lesdites quantités déterminées dudit fluide de traitement extrait par lesdits trous d'extraction de fluide de traitement (13) et envoyant un mélange desdites quantités déterminées dudit fluide de traitement au moyen de traitement (7) ;
ledit dispositif de mesure du point de rosée (5) est **caractérisé en ce qu'**il comprend au moins deux desdits éléments tubulaires d'extraction de fluide de traitement (6, 6', 6"), chacun se prolongeant le long d'un axe respectif (R', R") d'extension prévalente ;
dans lequel lesdits axes respectifs (R', R") d'extension prévalente se trouvent dans des plans respectifs positionnés en séquence transversalement, en particulier perpendiculairement, à ladite direction d'avancement (A) dudit fluide de traitement ; ou dans lequel lesdits axes (R', R") d'extension prévalente sont positionnés dans un même plan positionné transversalement, en particulier perpendiculairement, à ladite direction d'avancement (A) dudit fluide de traitement ;
dans lequel lesdits axes (R', R") d'extension prévalente sont décalés angulairement l'un par rapport à l'autre par un angle (β) qui est inférieur à 180°, en particulier sensiblement identique à 90°, ou dans lequel lesdits axes (R', R") d'extension prévalente sont alignés l'un sur l'autre.

2. Dispositif de mesure du point de rosée (5) selon la revendication 1, dans lequel ledit axe (R, R', R") d'extension prévalente forme un angle (α) qui est inférieur à 90°, en particulier sensiblement identique à 45°, par rapport à un axe de rotation (W) d'une valeur d'ajustement (11) conçue pour ajuster un écoulement dudit fluide de traitement quittant ledit générateur de fluide de traitement (3), dont l'axe de rotation (W) se trouve dans un plan positionné transversalement, en particulier perpendiculairement, à ladite direction d'avancement (A) dudit fluide de traitement.

3. Dispositif de mesure du point de rosée (5) selon la revendication 1 ou 2, dans lequel ledit axe (R, R', R") d'extension prévalente se prolonge sensiblement parallèlement à un diamètre (D) dudit conduit d'extraction (8).

4. Dispositif de mesure du point de rosée (5) selon la revendication 3, dans lequel lesdits au moins deux éléments tubulaires d'extraction de fluide de traitement (6, 6', 6") se prolongent sensiblement le long de l'ensemble dudit diamètre (D) dudit conduit d'extraction (8) ; ou dans lequel lesdits au moins deux éléments tubulaires d'extraction de fluide de traitement (6, 6', 6") se prolongent le long d'une partie dudit diamètre (D) comprise entre une paroi externe (14) dudit conduit d'extraction (8) et un axe (S) de symétrie dudit conduit d'extraction (8).

5. Dispositif de mesure du point de rosée (5) selon l'une des revendications 1 à 4, dans lequel lesdits trous d'extraction de fluide de traitement (13) sont agencés en séquence le long dudit axe (R, R', R") d'extension prévalente.

6. Dispositif de mesure du point de rosée (5) selon l'une des revendications 1 à 5, dans lequel lesdits trous d'extraction de fluide de traitement (13) sont agencés en séquence le long dudit axe (R, R', R") d'extension prévalente de façon à être équidistants les uns des autres en fonction d'une loi de distribution linéaire, ou de façon à se rapprocher les uns des autres à proximité d'une paroi interne (14) dudit conduit d'extraction (8) et à s'éloigner les uns des autres à proximité d'un axe (S) de symétrie dudit conduit d'extraction (8) en fonction d'une loi de distribution quadratique.

7. Dispositif de mesure du point de rosée (5) selon l'une des revendications 1 à 6, dans lequel lesdits trous d'extraction de fluide de traitement (13) sont agencés en séquence parallèlement audit axe (R, R', R") d'extension prévalente de façon à former une rangée ; ou dans lequel lesdits trous d'extraction de fluide de traitement (13) sont agencés en séquence parallèlement audit axe (R, R', R") d'extension prévalente de façon à former une pluralité de rangées qui sont sensiblement parallèles les unes aux autres et espacées angulairement le long d'une circonférence (C) dudit au moins un élément tubulaire d'extraction de fluide de traitement (6, 6', 6").

8. Dispositif de mesure du point de rosée (5) selon l'une des revendications 1 à 7, dans lequel lesdits trous d'extraction de fluide de traitement (13) ont des diamètres qui diminuent vers un axe (S) de symétrie dudit conduit d'extraction (8).

9. Dispositif de mesure du point de rosée (5) selon l'une des revendications 1 à 8, dans lequel lesdits au moins deux éléments tubulaires d'extraction de fluide de traitement (6, 6', 6") sont fermés au niveau d'une extrémité distale (15) de ceux-ci, et dans lequel lesdits éléments tubulaires d'extraction de fluide de traitement (6, 6', 6") comprennent une ouverture (16, 16', 16") au niveau d'une extrémité proximale (17) de ceux-ci, l'ouverture (16) étant en communication fluidique avec ledit moyen de traitement (7).

10. Dispositif de mesure du point de rosée (5) selon l'une des revendications 1 à 9, comprenant en outre un moyen formant tuyau (18') pour raccorder en parallèle les unes aux autres des ouvertures respectives (16', 16") desdits au moins deux éléments tubulaires d'extraction de fluide de traitement (6', 6") avant l'entrée dans ledit moyen de traitement (7).

11. Installation de déshumidification (1) pour déshumidifier des matières plastiques sous la forme de granulés et/ou de microgranulés et/ou de poudre et/ou de flocons, ladite installation (1) comprenant un générateur de fluide de traitement (3) et au moins une trémie de déshumidification (4) destinée à alimenter une machine d'utilisateur respective (2), en particulier une machine de traitement et de transformation de matières plastiques, ladite machine d'utilisateur (2) comprenant un appareil de fusion pour fusionner lesdites matières plastiques et un appareil de moulage pour mouler, en particulier par injection et/ou soufflage et/ou compression, lesdites matières plastiques ;
ladite installation (1) est **caractérisée en ce que**
elle comprend un dispositif de mesure du point de rosée (5) selon les revendications 1 à 10.

12. Procédé de commande d'une installation de déshumidification (1) de matières plastiques sous la forme de granulés et/ou de microgranulés et/ou de poudre et/ou de flocons, ladite installation (1) comprenant un générateur de fluide de traitement (3) et au moins une trémie de déshumidification (4) destinée à alimenter une machine d'utilisateur respective (2), en particulier une machine de traitement et de transformation de matières plastiques, ladite machine d'utilisateur (2) comprenant un appareil de fusion pour fusionner lesdites matières plastiques et un appareil de moulage pour mouler, en particulier par injection et/ou soufflage et/ou compression, lesdites matières plastiques ;
ledit procédé est **caractérisé en ce que**
un dispositif de mesure du point de rosée (5) selon les revendications 1 à 10 est utilisé.
